# EUROPEAN PATENT SPECIFICATION

(11) **EP 2 522 260 B1**
(45) Date of publication and mention of the grant of the patent: **04.12.2013**
(21) Application number: 12005695.7
(22) Date of filing: 12.02.2010
(51) Int. Cl.: A47J 31/06, A47J 31/36

(54) **Espresso coffee machine**
Espressokaffeemaschine
Machine à café espresso

(30) Priority: 16.02.2009 IT GE20090008
(43) Date of publication of application: 14.11.2012
(62) Divisional of application: 10707444.5
(73) Proprietor: Espressocap S.p.A., 20010 Bareggio (MI) (IT)
(72) Inventor: Bardazzi, Bruno, 50037 San Piero a Sieve (FI) (IT); Doria, Alessandro, 20147 Milano (MI) (IT)
(74) Representative: Cacciamani, Clizia

(56) References cited:
- EP-A2- 1 937 117
- WO-A1-2005/090196
- WO-A1-2008/093232
- DE-U1- 20 217 408

## Description

The present invention relates to an espresso coffee machine, and it particularly relates to an espresso coffee machine suitably designed to use pre-packaged portion.

The so-called coffee capsules or pods have been routinely used for a very long time, that is pre-packaged portions which can be used with ad-hoc machines as well as with common espresso coffee machines or even with "moka" pots in other cases.

This type of solution appears to be greatly appreciated by the users, who consider it as positive both from a hygienic point of view and for its easy preparation and steady performance. In particular, this type of pre-packaged portion machines is widely used in communities as offices, shops and the like, when the number of users is not sufficiently high to account for the use of complex automatic machines.

There are a large number of construction alternatives to produce such portions, from the point of view of both the adopted forms and the materials. Currently, most market operators have directed their attention to the production of pre-packaged portions completely made of a plastic material or a metallic material, either alone or in combination with a plastic material. Both choices are very practical both from a material processing point of view and for their effective performance with the devices intended to produce the coffee brew. However, there are remarkable environmental problems in handling the exhausted products. Indeed, the materials are difficult to be recycled in both cases, and in any case the recycling costs are extremely high.

Therefore, an aim of the present disclosure is to provide a pre-packaged ground coffee portion which is produced in such a way as to give a product provided with an increased environmental compatibility and in any case able to fully accomplish its function, allowing to yield high-quality coffee brews in an extremely simple manner.

Of course, preferably such a pre-packaged portion will require an espresso coffee machine projected to take the best advantage of its features and simple to be used and produced; thus, another aim of the present invention is such a machine.

Patent EP1635680B1, in the name of the same Applicant, discloses an espresso coffee machine comprising a water tank, a pump for feeding said water to a boiler, a hot-water supply assembly, and filter-holder means to accommodate a ground coffee portion which is preferably pre-packaged; said supply assembly and said filter-holder means are sealingly coupled to each other, and the path of the coupling movement lies on a plane which is substantially perpendicular to the intermediate coupling plane of said supply assembly and said filter-holder means, the surfaces of said supply assembly and said filter-holder means contacting each other only upon coupling therebetween; said filter-holder means is hinged at one end thereof to the body of said coffee machine near said supply assembly.

Then, such a machine has been developed into the machine as described in EP1937117A1, wherein said machine further includes an ejection unit arranged near the periphery of said supply assembly and protruding perpendicular to the intermediate coupling plane of said supply assembly and said filter-holder means, said ejection unit being provided at the free end thereof with means intended to co-act with the trail edge of said pre-packaged portion outwardly protruding from said filter-holder means, such as to result in the ejection thereof upon the removal of the same filter-holder means from said supply assembly.

However, this type of solution is effective when the pre-packaged portion is made of a rigid material which can easily react to the stress imparted by the ejection unit. In the case of the pre-packaged portion according to the present invention, the need for further developing the machine is clear since the consistency of the material forming such a capsule is much lower than that of the plastic material, and it strongly absorbs the extracting water; therefore, its consistency tends to be further reduced, to such an extent that an ejection unit of the type as described in the above-mentioned document cannot be actually used.

Therefore, an object of the present invention is an espresso coffee machine comprising a water tank, a pump for feeding said water to a boiler, a hot-water supply assembly, and filter-holder means in which a pre-packaged ground coffee portion can be accommodated; said supply assembly and said filter-holder means are sealingly coupled to each other and the path of the coupling movement lies on a plane which is substantially perpendicular to the intermediate coupling plane of said supply assembly and said filter-holder means, the surfaces of said supply assembly and said filter-holder means contacting each other only upon coupling therebetween; said filter-holder means is hinged at one end thereof to the body of said coffee machine near said supply assembly, an ejection unit being provided for said pre-packaged portion; said ejection unit comprises a member arranged in contact with the trail edge of said portion, and particularly with the radial flange thereof, and pivotally connected to said filter-holder means, temporary coupling means being provided between said member and the wall of the body of said machine near said supply assembly, said temporary coupling means being provided with disengagement means.

In one embodiment, said temporary coupling means comprise at least a pair of magnets, one magnet being arranged on said pivoting member and the other magnet being arranged on said body of the machine near said supply assembly. Preferably, said pivoting member is a bracket whose both ends are pivotally connected to said filter-holder means, and the cove included between said two ends contacts a large portion of the radial flange protruding from said pre-packaged portion.

In a further embodiment, said filter-holder means comprises a cavity intended to accommodate the pre-packaged portion, said cavity being provided at the bottom wall thereof with an annular groove formed near the side walls thereof, and with a plurality of concentric annular channels; each of said channels communicates by means of a respective duct with a brew collecting chamber communicating with the dispensing conduit.

Further advantages and features of the present invention will be apparent from the following detailed description of an embodiment thereof, which is provided by way of example, and not by way of limitation, with reference to the accompanying drawings, wherein:
Figure 1A is a side elevation view of an embodiment of the pre-packaged ground coffee portion useable in the machine according to the invention;
Figure 1B is a partial perspective view of the pre-packaged portion of Figure 1A;
Figure 2 is a sectional view of an embodiment of the espresso coffee machine according to the present invention in a brew extracting position;
Figure 3 is a sectional view of the machine of Figure 1 in the first step of ejecting the pre-packaged portion; and
Figure 4 is a perspective view of the machine of Figure 1 when the ejection of the capsule is completed.

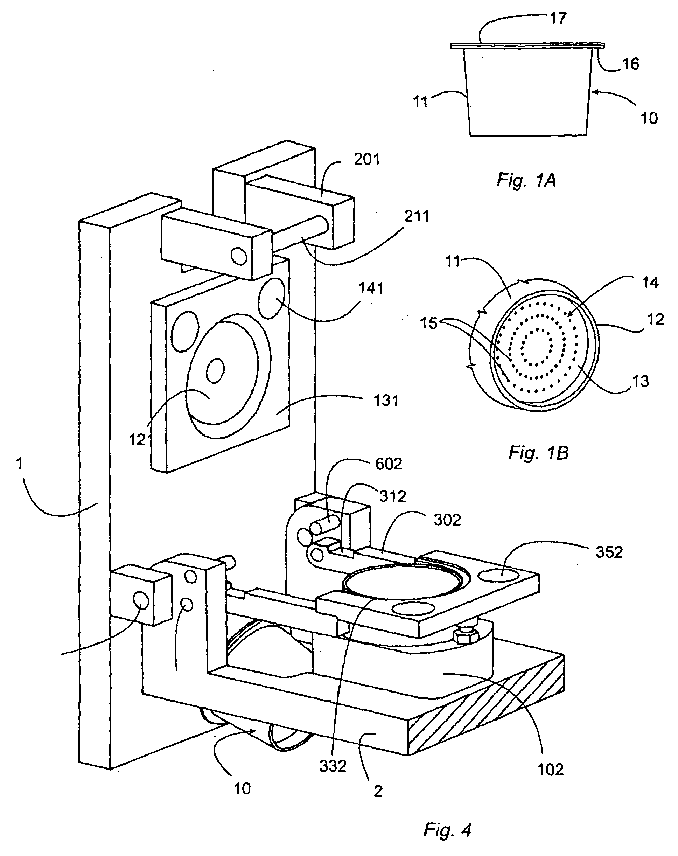

Figure 1 illustrates a pre-packaged portion useable in the espresso coffee machine according to the present invention; reference numeral 10 denotes the pre-packaged portion, in this case comprising a container body of food grade paperboard having the side wall 11 which is tapered from the upper end where there is formed a radial flange 16 to which a closing surface 17 is applied, towards the lower end. Figure 1B illustrates the pre-packaged portion of Figure 1A according to a perspective in which it can be seen the bottom wall 13 at which an axial flange 12 is formed by the side wall 11. At the bottom wall 13 there are concentric annular paths 14 along which there are formed through-holes 15 whose cross-section is such as that brewing water can pass therethrough but not the ground coffee contained within the portion. The closing surface 17 is formed similarly to the bottom wall, being made of paper or the like and provided with a plurality of holes.

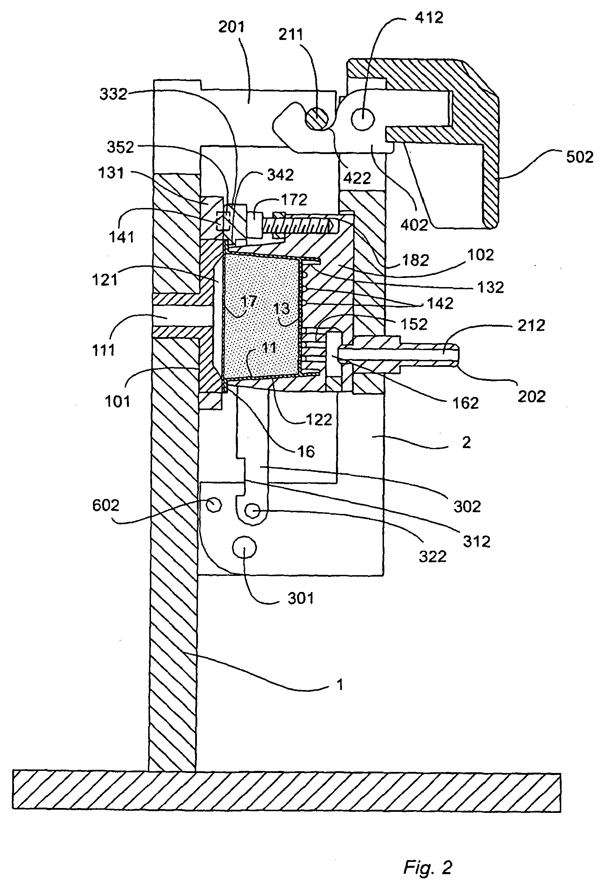

Figure 2 illustrates the espresso coffee machine according to the present invention. The body 1 of the espresso coffee machine - not entirely shown herein - is provided with pressurized hot-water supply means 101 comprising a dispensing spout 121 connected to a duct 111 which in turn is connected to the boiler of the machine (not shown in the Figure). The dispensing means of the machine is positioned in front of filter-holder means comprising a lid 2 on which there is arranged a filter-holder assembly 102 provided with a cavity 122 in which the pre-packaged portion 10 is accommodated, wherein like reference numerals as described above refer to like elements.

At the bottom wall of said cavity 122 there are formed concentric annular grooves 142 each leading to a duct 152 debouching into the manifold 162 which in turn is connected to the brew dispensing nozzle 202 whose channel 212 communicates with said manifold 162. Furthermore, the bracket 302 is attached to the lid 2 through pins 322 at the ends of each arm thereof, while the cove 332 of said bracket carries a magnet 342 which is coupled to another magnet 141 arranged on the frame 131 surrounding the pressurized hot-water supply means 101. Each arm of the bracket 302 has the notch 312 near the end pivoted on 322, while a tooth-shaped relief 352 intended to co-act with the radial flange 16 protruding from said pre-packaged portion 10 is formed in the cove 332, which relief is faced towards the filter-holder assembly 102. The correct position of the bracket 302 with respect to the filter-holder assembly 102 is achieved by the adjusting spacer bolt 172 accommodated in the threaded cavity 182.

The lid 2 is coupled to the machine through the overhanging arm 201 protruding from the wall 1 of the machine, which arm is provided with the pin 211 co-acting with the notch 422 cut in the swinging latch 402 pivoted to the lid on 412. The latch is operated through the handle 502.

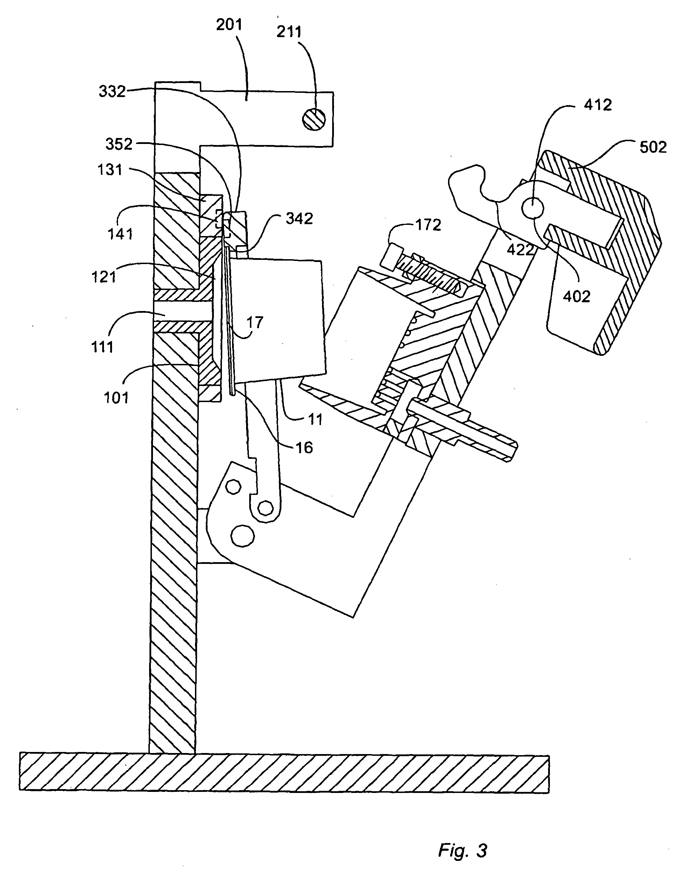

Figure 3 illustrates the machine of Figure 2 in the opened position of the lid 2; like reference numerals refer to like elements. In the figure it can be seen the extraction of the pre-packaged portion 10 from the cavity 122 of the filter-holder assembly 102.

Figure 4 shows the machine of the above figures when the ejection of the portion is completed. Like reference numerals refer to like elements; in the figure it can be seen that the configuration of the lid 2 is such that the ejected portion 10 can freely fall down without affecting the interaction between the machine and the lid.

The operation of the machine according to the present invention will become apparent from the following. When the portion is inserted into the cavity 122 of the filter-holder assembly 102 and the lid is closed through the cooperation of the latch 402 and the pivot 211 as shown in Figure 2, the ground coffee 20 contained within the portion 10 will begin to be brewed. Water permeates the closing surface 17 preferably formed similarly to the bottom wall 13, resulting in the extraction of the ground coffee. The brew is collected from the holes 15 arranged along the paths 14 formed at the bottom wall 13 into the channels 142 and from these, through the ducts 152, it is poured into the manifold 162 and supplied to be consumed through the nozzle 202.

While the brewing water is evenly poured into the capsule throughout its cross-section to embrace most of the ground coffee contained within the portion as soon as possible, when the brew is being supplied it is preferred to locally split the flows such as to promote those turbulence effects which produce the so-called "cream effect", which is extremely valuable from an organoleptic point of view and greatly appreciated by users, in the brewed extract.

When the extraction is concluded, the portion has now to be ejected from the filter-holder assembly to conveniently allow for the following extraction. Clearly, the portion could be manually removed from the filter-holder assembly, but this would bring a discomfort to the user; furthermore, because of the consistency of the material used to package the portion and due to its remarkable hygroscopicity, the exhausted portion will be highly deformed and particularly swelled, therefore its removal from the cavity where brewing occurred is not particularly easy and clean.

For this reason, in the machine according to the present invention there has been used the system as shown in Figures 2 and 3 of the accompanying drawings; namely, the portion 10 is provided with a protruding radial flange 16 which is in great extent abutted against the tooth-shaped relief 342 protruding inside the cove 332 of the bracket 302 as in the situation shown in Fig. 2. When the lid 2 is removed from the body of the machine by operating the latch 402 through the handle 502, the bracket remains coupled to the body of the machine due to the interaction between the magnets 342 of the bracket and the magnets 141 arranged on the frame 131 surrounding the hot-water supply means 101.

This situation causes the portion 10 to be removed from the cavity 122 of the filter-holder assembly 102; when the lid 2 is continued to be opened, the pins 602 protruding from the wall of the lid come into contact with the notches 312 formed in the arms of said bracket 302, and they contribute to release the same bracket 302 from its coupling to the wall 1 of the machine, resulting in the effective disengagement of the pairs of magnets 342, 141. It should be noted that it is firstly the swinging of the lid 2 relative to the pin 301 to promote the disengagement of the magnets by slipping the bracket 302 downwards with respect to the frame 131 as it can be noted in Fig. 3.

As shown in Fig. 4, the portion can now freely fall down onto the bottom portion of the machine, wherein a removable container will be advantageously provided to collect the exhausted portions, which removable container is not shown in the figure but well known for its use in several commercially available machines.

The machine according to the invention is appropriately designed and implemented to take the best advantage of the features of the pre-packaged portion as above described as well as to make its use extremely simple. Moreover, this machine is very useful in the case of pre-packaged portions having a relatively soft structure, and therefore showing an increase of volume after the brewing.

## Claims

1. Espresso coffee machine comprising a water tank, a pump for feeding said water to a boiler, a hot-water supply assembly (101) and filter-holder means (2, 102) in which a pre-packaged ground coffee portion (10) can be accommodated; said supply assembly (101) and said filter-holder means (2, 102) being sealingly coupled to each other and the path of the coupling movement lying on a plane which is substantially perpendicular to the intermediate coupling plane of said supply assembly (101) and said filter-holder means (2, 102), the surfaces of said supply assembly (101) and said filter-holder means (2, 102) contacting each other only upon coupling therebetween, said filter-holder means being hinged at one end thereof to the body (1) of said coffee machine near said supply assembly (101), an ejection unit being provided for said pre-packaged portion, **characterised in that** said ejection unit comprises a member (302) arranged in contact with the trail edge (16) of said portion (10) and pivotally connected (322) to said filter-holder means (2), temporary coupling means (352, 141) being provided between said member (302) and the wall of the body (1) of said machine near said supply assembly (101), said temporary coupling means (352, 141) being provided with disengagement means (602).

2. Espresso coffee machine according to claim 1, wherein said temporary coupling means comprises at least a pair of magnets, one magnet (352) arranged on said pivoting member (302) and the other magnet (141) arranged on said body (1, 131) of the machine near said supply assembly (101).

3. Espresso coffee machine according to claim 1 or 2, wherein said pivoting member is a bracket (302) whose both ends are pivotally connected (322) to said filter-holder means (2, 102) and the cove (332) included between said two ends of said bracket (302) contacting a large portion of the trail edge (16) of said pre-packaged portion (10).

4. Espresso coffee machine according to claim 3, wherein said cove (332) is provided with an inwardly protruding tooth-shaped relief (342) intended to cooperate with said trail edge (16) of said pre-packaged portion (10).

5. Espresso coffee machine according to any one of the preceding claims 1 to 4, wherein said disengagement means (602) of said temporary coupling means (352, 141) comprises at least a bumping means (602) arranged on said filter-holder means (2) to contact said pivoting member (302) in a zone near the end (322) thereof which is pivoted to said filter-holder means (2).

6. Espresso coffee machine according to any one of the preceding claims 1 to 5, wherein said filter-holder means (2, 102) comprises a cavity (122) intended to accommodate said pre-packaged portion (10), said cavity (122) being provided at the bottom wall thereof with an annular groove (132) formed near the side walls thereof, and with a plurality of concentric annular channels (142), each of said channels (142) communicating by means of a respective duct (152) with a brew collecting chamber (162) in communication with the dispensing conduit (202).

## Patentansprüche

1. Espresso-Kaffeemaschine, umfassend einen Wasserbehälter, eine Pumpe zur Zuführung von Wasser zu einem Kessel, eine Warmwasserversorgung Baugruppe (101) und Filter-Halter (2, 102), in dem eine abgepackte Kaffeepulverportion (10) untergebracht werden kann; besagte Versorgungsbaugruppe (101) und besagter Filter-Halter (2, 102) sind dicht miteinander verbunden und der Pfad der Kupplungsbewegung liegt in einer Ebene, die im wesentlichen senkrecht zu der mittleren Kupplungsebene der besagten Versorgungsbaugruppe (101) und des besagten Filter-Halters (2, 102) ist, wobei die Oberflächen der besagten Versorgungsbaugruppe (101) und des Filter-Halters (2, 102) miteinander in Kontakt nur durch Kupplung dazwischen sind, wobei besagter Filter-Halter an einem Ende davon mit dem Körper (1) der besagten Kaffeemaschine bei besagter Versorgungsbaugruppe (101) klappbar gelagert ist, wobei eine Auswurfeinheit für besagte abgepackte Portion vorgesehen ist, **dadurch gekennzeichnet, dass** die Auswurfeinheit ein Element umfasst (302), das in Kontakt mit der Hinterkante (16) der besagten Portion (10) ist und schwenkbar (322) mit dem Filterhalter (2) ist, wobei temporäre Kupplungsmittel (352, 141) zwischen besagten Gliedern (302) und der Wand des Körpers (1) der besagten Maschine bei besagter Versorgungsbaugruppe (101) vorgesehen ist, wobei besagtes temporäre Kupplungsmittel (352, 141) mit Ausrückmittel (602) versehen ist.

2. Espresso-Kaffeemaschine nach Anspruch 1, wobei besagtes Kupplungsmittel wenigstens ein Paar von Magneten umfasst, ein Magnet (352) ist an besagtem Schwenkelement (302) angeordnet und der andere Magnet (141) ist auf besagtem Körper (1, 131) der Maschine bei besagtem Versorgungsbaugruppe (101) angeordnet.

3. Espresso-Kaffeemaschine nach Anspruch 1 oder 2, wobei das schwenkbare Glied eine Klammer (302) ist, deren beide Enden schwenkbar (322) mit besagtem Filterhalter (2, 102) und mit der Hohlkehle (332) verbunden sind, wobei besagte Hohlkehle (332) zwischen besagten beiden Enden der besagten Klammer (302), die in Kontakt mit einer großen Portion der Hinterkante (16) der besagten abgepackten Portion (10) ist, umfasst ist.

4. Espresso-Kaffeemaschine nach Anspruch 3, wobei besagte Hohlkehle (332) mit einer nach innen vorstehenden Zahn-formigen Entlastung (342) zur Zusammenarbeit mit besagter Hinterkante (16) der besagten abgepackten Portion (10) vorgesehen ist.

5. Espresso-Kaffeemaschine nach jedem der vorhergehenden Ansprüche 1 bis 4, wobei besagtes Ausrückmittel (602) des besagten temporären Kupplungsmittels (352, 141) wenigstens ein Siedeverzug-Mittel (602) umfasst, das an besagtem Filterhalter (2) angeordnet ist, um mit dem Schwenkglied (302) in einer Zone beim Ende (322) davon, die schwenkbar an besagtem Filterhalter (2) ist, in Verbindung zu treten.

6. Espresso-Kaffeemaschine nach einem der vorhergehenden Ansprüche 1 bis 5, wobei besagter Filter-Halter (2, 102) einen Hohlraum (122) zur Aufnahme der besagten abgepackten Portion (10) umfasst, wobei besagter Hohlraum (122) an der unteren Wand davon mit einer bei der Seitenwände gebildete ringförmigen Mutter (132) versehen ist, und mit einer Vielzahl von konzentrischen ringförmigen Kanälen (142) versehen ist, wobei jeder Kanal (142) mittels einer jeweiligen Leitung (152) mit eine Sammelkammer zum Speichern des Aufgusses (162) in Kommunikation mit der Abgabeleitung (202), verbunden ist.

## Revendications

1. machine à café expresso comportant un réservoir d'eau , une pompe pour l'alimentation de ladite eau à une chaudière, un ensemble d'alimentation d'eau chaude (101) et des moyens de porte-filtre (2, 102) dans lesquels une portion de café moulu pré- emballé (10) peut être logé , ledit . ensemble d'alimentation (101) et ledit moyen de porte-filtre (2, 102) étant étanche couplé à l'autre et la trajectoire du mouvement de couplage étant logé sur un plan qui est sensiblement perpendiculaire au plan de couplage intermédiaire dudit ensemble d'alimentation (101) et desdits moyens de porte-filtre (2, 102), les surfaces dudit ensemble d'alimentation (101) et ledit moyens de porte-filtre (2, 102) en contact les uns les autres uniquement par couplage entre ceux-ci , lesdits moyens de porte-filtre étant articulé à une extrémité de celui-ci sur le corps (1) de ladite machine à café à proximité dudit ensemble d'alimentation (101), une unité d'éjection étant prévue pour ladite portion de café pré-emballé, **caractérisé en ce que** ladite unité d'éjection comprend un élément (302) agencée en contact avec le bord arrière (16) de ladite partie (10) et reliée de façon pivotante (322) vers ledit moyen de filtre - support (2), des moyens d'accouplement temporaire (352, 141) étant prévu entre ledit élément (302) et la paroi du corps (1) de ladite machine à proximité dudit ensemble d'alimentation (101) , lesdits moyens d'accouplement temporaire (352, 141) étant pourvus de moyens de dégagement (602 ).

2. Machine à café expresso selon la revendication 1, dans laquelle lesdits moyens de couplage temporaire comprend au moins une paire d'aimants, un aimant (352) disposé sur ledit élément pivotant (302) et l'autre aimant (141) disposé sur ledit corps (1, 131) de la machine à proximité dudit ensemble d'alimentation (101).

3. Machine à café expresso selon la revendication 1 ou 2, dans laquelle ledit élément pivotant est un support (302) dont les deux extrémités sont reliées de manière pivotante (322) sur lesdits moyens de porte-filtre (2, 102) et l'anse (332) compris entre lesdites deux extrémités de ladite patte (302) en contact avec une grande partie du bord de sortie (16) de ladite partie de pré-emballé (10).

4. Machine à café expresso selon la revendication 3, dans laquelle ladite anse (332) est pourvue d'un relief en forme de dent saillant vers l'intérieur (342) destinée à coopérer avec ledit bord arrière (16) de ladite partie pré-emballé (10).

5. Machine à café expresso selon l'une quelconque des revendications précédentes 1 à 4, dans laquelle lesdits moyens de dégagement (602) desdits moyens d'accouplement temporaire (352, 141) comprennent au moins un moyen de supplantation (602) disposés sur lesdits moyens de porte-filtre (2) pour communiquer avec ledit élément pivotant (302) dans une zone proche de l'extrémité (322) de celui-ci qui est pivoté sur lesdits moyens de porte-filtre (2).

6. Machine à café expresso selon l'une quelconque des revendications précédentes 1 à 5, dans laquelle ledit moyens de porte-filtre (2, 102) comprennent une cavité (122) destinée à recevoir ladite partie pré-emballé (10), ladite cavité (122) étant pourvue, à la paroi de fond de celui-ci, avec une gorge annulaire (132) formé à proximité des parois latérales de ceux-ci, et avec une pluralité de canaux annulaires concentriques (142), chacun desdits canaux (142) communiquant par l'intermédiaire d'un conduit respectif (152) avec une chambre collectrice d'infusion (162) en communication avec le conduit de distribution (202).
